# FASCICULE DE BREVET EUROPEEN

(11) **EP 0 656 287 B1**
(45) Date de publication et mention de la délivrance du brevet: **20.01.1999**
(21) Numéro de dépôt: 94118630.6
(22) Date de dépôt: 26.11.1994
(51) Int. Cl.: B60S 1/08, H02K 5/22

(54) **Moto-réducteur, notamment pour un dispositif d'essuie-glace de véhicule automobile**
Getriebemotor, insbesondere für Kraftfahrzeug-Scheibenwischeranlage
Motor and reduction unit, notably for a motor vehicle windscreen wiper device

(30) Priorité: 01.12.1993 FR 9314391
(43) Date de publication de la demande: 07.06.1995
(73) Titulaire: VALEO SYSTEMES D'ESSUYAGE, 78180 Montigny-Le-Bretonneux (FR)
(72) Inventeur: Stelmarski, Pascal, F-86000 Poitiers (FR)
(74) Mandataire: Gamonal, Didier

(56) Documents cités:
- EP-A- 0 073 279
- WO-A-89/10652
- DE-A- 3 542 632
- GB-A- 2 079 540

## Description

La présente invention est relative à un moto-réducteur notamment pour un dispositif d'essuie-glace de véhicule automobile.

Elle concerne plus particulièrement des moyens de protection des bornes de connexion électrique.

On connaît déjà, dans l'état de la technique, des motoréducteurs de ce type qui comportent un moteur constitué d'une culasse logeant un stator et un induit dont l'arbre est apte à entraîner un système réducteur logé dans un carter constitué d'un socle, d'un couvercle destiné à fermer ledit socle, et d'une plaque de fermeture de la culasse dudit moteur, ledit carter portant, sur une surface extérieure, des bornes de connexion en saillie, pour l'alimentation du moteur électrique.

Ces moto-réducteurs sont destinés à être montés sur la carrosserie ou sur la vitre du véhicule d'une façon telle que les bornes de connexion se trouvent en vis-à-vis de la surface de montage.

L'espace se trouvant entre la carrosserie ou la vitre et le moto-réducteur étant très réduit, de l'ordre de 20 mm, il arrive que des corps étrangers viennent se loger dans cet espace et peuvent être en contact avec les bornes de connexion électrique en provoquant un court-circuit entre ces bornes de connexion. Ce phénomène peut entraîner une panne du moteur, voire la destruction du véhicule par incendie.

Il a déjà été proposé, notamment dans le document GB-A-2 079 540, d'inclure les bornes de connexion dans un connecteur auquel vient directement s'accrocher le connecteur complémentaire issu du véhicule mais cette disposition pose des problèmes car, d'une part cela oblige à modifier intégralement tout le système de connexion ce qui implique un développement long et coûteux, et d'autre part il est très délicat de déplacer le connecteur ainsi fixé sur le moto-réducteur suivant les besoins du constructeur de véhicule automobile.

Le document WO 89/10652 enseigne quant à lui de disposer un connecteur sur des bornes de connexion traversant le couvercle du socle de réducteur, ledit connecteur étant adapté pour l'accrochage d'un connecteur complémentaire venant du véhicule. Ce document présente la même inconvénient que celui énoncé au paragraphe précédent à propos du choix de la position du connecteur. En outre, ce connecteur ne protège pas les bornes de connexion alimentant l'induit du moteur électrique.

Il a également été proposé dans le document EP-A-0 073 279 et dans le but de résoudre un problème tout à fait différent, à savoir protéger la tête du conducteur du véhicule en cas d'accident lorsque le moto-réducteur est disposé dans l'habitacle du véhicule, de recouvrir d'un capot en forme de demi-coquille l'intégralité du carter réducteur et de la culasse du moteur. Un tel capot présente un coût supplémentaire démesuré par rapport au but à atteindre par la présente invention qui est uniquement de protéger les bornes de connexion électrique.

L'invention a donc pour but de résoudre ces problèmes en proposant une solution simple et fiable.

Dans ce but, l'invention propose un moto-réducteur, notamment pour un dispositif d'essuie-glace, comportant un moteur électrique entraînant un système de réduction logé dans un carter constitué d'un socle, d'un couvercle destiné à fermer ledit socle, et d'une plaque de fermeture de la culasse que comporte ledit moteur, ledit carter portant sur une surface extérieure des bornes de connexion auxquelles sont soudés des conducteurs pour l'alimentation du moteur électrique, et un capot apte à recouvrir lesdites bornes de connexion.

L'invention se caractérise en ce que les bornes de connexion électrique sont portées d'une part, par ledit socle et, d'autre part, par ladite plaque de fermeture et en ce que ledit capot comporte des moyens de fixation par emmanchement à force sur ledit socle et des moyens d'entretoisement.

Grâce à l'invention, toutes les bornes de connexion sont protégées de toutes agressions extérieures grâce à un dispositif très simple.

Selon d'autres caractéristiques de la présente invention :
- ledit capot a une forme en U dont les deux bras sont de longueurs inégales ;
- le bras le plus court dudit capot vient en appui sur le socle et l'autre bras porte lesdits moyens de fixation.

Selon un autre aspect de l'invention, le capot est en matériau translucide.

Grâce à cette disposition, il est possible de vérifier l'état des soudures et des bornes de connexion sans démonter ledit capot.

D'autres caractéristiques et avantages de la présente invention apparaîtront à la lecture de la description qui va suivre et des dessins annexés dans lesquels :
- la figure 1 est une vue de dessus d'un moto-réducteur selon l'invention ;
- la figure 2 est une vue en coupe d'une partie du motoréducteur selon l'invention suivant l'axe A-A ;
- la figure 3 est une vue en coupe partielle montrant les moyens de fixation du capot.

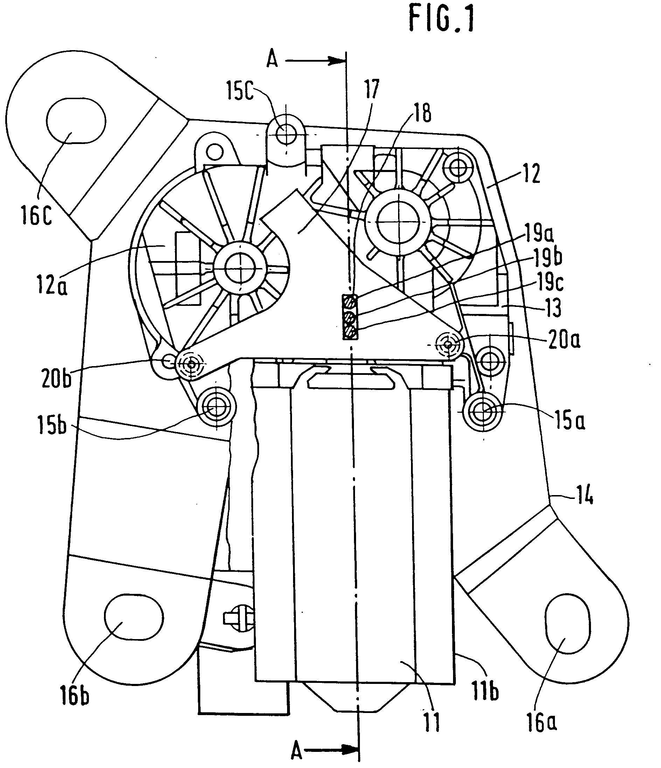

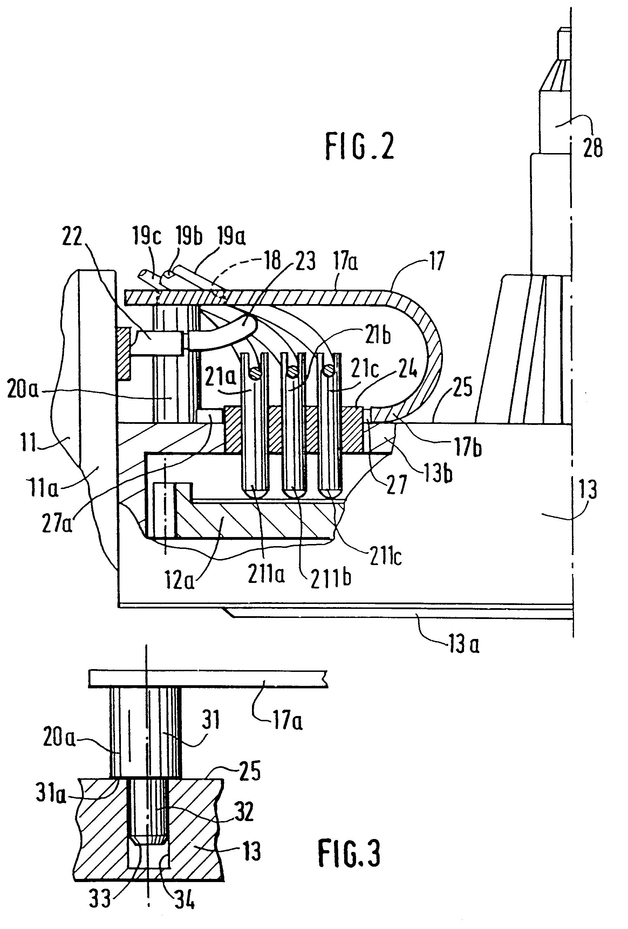

En référence aux figures 1 et 2, on a représenté un moto-réducteur comportant un moteur 11 et un réducteur 12 qui sont montés sur une platine 14 par des moyens 15a, 15b, 15c.

La platine 14 est destinée à être fixée sur la carrosserie ou la vitre du véhicule par des moyens 16a, 16b, 16c.

Le réducteur 12 comporte un système de réduction logé dans un carter constitué d'une plaque de fermeture 11a de la culasse 11b protégeant le moteur, d'un socle 13 et d'un couvercle 13a destiné à fermer le socle 13. Le socle porte, sur une surface externe, des bornes de connexion électrique 22, 21a, 21b, 21c, en saillie, pour l'alimentation du moteur 11 par l'intermédiaire des moyens d'alimentation électrique représentés par des conducteurs 19a, 19b, 19c, 23.

La borne de connexion 22 est une fiche portée par la plaque de fermeture 11a. La fiche 22 est connectée à un conducteur 23 destiné à alimenter l'induit du moteur non représenté.

Comme il peut être constaté sur la figure 2, les bornes de connexion 21a, 21b, 21c sont portées, en saillie, sur une surface externe 25 du socle 13 et sont implantées dans un support isolant 24 fixé sur la surface 25 du socle 13. Les bornes de connexion 21a, 21b, 21c traversent la paroi 13b du socle 13 pour être, d'une part, raccordées aux moyens de détection de position de l'arbre de sortie 28 du moteur 11 et, d'autre part, soudées aux conducteurs 19a, 19b, 19c. Les moyens de détection de position peuvent être, par exemple des frotteurs 211a, 211b, 211c qui viennent glisser sur les pistes conductrices de codage se trouvant sur la roue dentée 12a du réducteur 12, entraînant l'arbre de sortie 28. En pratique, les bornes de connexion 21a, 21b, 21c et les frotteurs 211a, 211b, 211c sont respectivement en une seule pièce et les extrémités libres des frotteurs constituent les bornes de connexion.

Les bornes de connexion 22, 21a, 21b, 21c portées, d'une part par le socle 13 et, d'autre part, par la plaque de fermeture 11a, sont recouvertes par un capot 17 dans lequel se trouve une ouverture 18 laissant passer les trois conducteurs 19a, 19b, 19c. Le capot 17 est fixé sur le socle 13 par des moyens 20a, 20b qui, dans ce mode de réalisation préféré, sont des pions. Le capot a une forme en U dont les deux bras sont de longueurs inégales. Le bras le plus court 17b a une échancrure 27 ayant également une forme en U dont un des deux bras est représenté par 27a sur la figure 2. Le bras 17b vient en appui sur le socle 13 et les deux bras de l'échancrure 27 entourent le support isolant 24. L'autre bras 17a du capot 17 porte les moyens de fixation 20a, 20b permettant de réaliser un clipage sur le socle tout en recouvrant la fiche 22.

Selon l'invention, le capot est en matériau électriquement isolant par exemple en polypropylène naturel. Par ailleurs, ce matériau permet avantageusement d'obtenir un gain de poids et une protection contre la corrosion.

D'autre part, il peut être prévu que le capot soit en matériau translucide permettant de vérifier l'état des soudures et des bornes de connexion des conducteurs 19a, 19b, 19c 23 sans démonter le capot 17.

A la figure 3, une vue partiellement en coupe montre les moyens de fixation 20a ou 20b. De même, les mêmes numéros de référence des éléments similaires des figures 1 et 2 sont repris.

Les moyens de fixation 20a représentés comportent des moyens de clipage sur le socle 13 et des moyens d'entretoisement.

Les moyens de clipage consistent en une tige 32 coopérant avec un alésage 34 créé dans le socle 13. Le diamètre de la tige 32 est légèrement supérieur au diamètre intérieur de l'alésage 34, ce qui permet un emmanchement en force. Par ailleurs, la tige 32 comporte à son extrémité un chanfrein 33 permettant de faciliter l'entrée de la tige 32 dans l'alésage 34.

Les moyens d'entretoisement consistent en une entretoise 31 de forme cylindrique située entre le bras 17a du capot 17 et la surface extérieure 25 du socle 13.

L'entretoise 31 a un épaulement 31a car son diamètre est plus grand que celui de la tige 32. La tige 32 a une longueur plus courte que la profondeur de l'alésage 34, ce qui permet, en conséquence, à l'épaulement 31a de l'entretoise 31 de venir s'appuyer entièrement sur la surface 25 du socle 13. Cet appui de l'épaulement 31a permet d'assurer une position verticale de l'entretoise 31 qui maintient ainsi le bras 17a parallèle à la surface 25 du socle 13.

La hauteur de l'entretoise 31 à laquelle on ajoute l'épaisseur du capot 17 ne doit pas dépasser une certaine limite, par exemple 20 mm, espace disponible entre la carrosserie et le moto-réducteur.

Ce capot 17 ainsi monté sur l'ensemble moto-réducteur permet de protéger avantageusement les bornes de connexion 21a, 21b, 21c, 22 contre l'intrusion des corps étrangers pouvant endommager le moteur électrique 11 par contact avec ces corps étrangers.

De plus, il peut être prévu que le couvercle 13a soit en une seule pièce avec la platine 14, ce qui simplifie le montage de l'ensemble sur la carrosserie ou la vitre du véhicule.

## Revendications

1. Moto-réducteur, notamment pour un dispositif d'essuie-glace comportant un moteur électrique (11) entraînant un système de réduction (12) logé dans un carter constitué d'un socle (13), d'un couvercle (13a) destiné à fermer ledit socle, et d'une plaque de fermeture (11a) de la culasse que comporte ledit moteur (11), ledit carter portant sur une surface extérieure (25) des bornes de connexion (22,21a,21b,21c) auxquelles sont soudés des conducteurs (23,19a,19b,19c), pour l'alimentation du moteur électrique (11) et un capot (17) apte à recouvrir lesdites bornes de connexion (22,21a,21b,21c), caractérisé en ce que les bornes de connexion (22,21a,21b,21c) sont portées, d'une part par le socle (13) et, d'autre part, par la plaque de fermeture (11a) et en ce que ledit capot (17) comporte des moyens de fixation (20a,20b) par emmanchement à force sur ledit socle (13) et des moyens d'entretoisement.

2. Moto-réducteur selon la revendication 1, caractérisé en ce que le capot (17) a une forme en U dont les deux bras (17a,17b) sont de longueurs inégales.

3. Moto-réducteur selon la revendication 2, caractérisé en ce le bras (17b) le plus court dudit capot (17) vient en appui sur le socle (13) et l'autre bras (17a) porte lesdits moyens de fixation (20a,20b).

4. Moto-réducteur selon la revendication 1, caractérisé en ce que les moyens d'emmanchement consistent en une tige (32) coopérant avec un alésage (34) dans le socle (13).

5. Moto-réducteur selon la revendication 2, caractérisé en ce que les moyens d'entretoisement consistent en une entretoise (31) située entre le bras (17a) le plus long dudit capot (17) et le socle (13).

6. Moto-réducteur selon l'une quelconque des revendications précédentes, caractérisé en ce que le capot (17) est en matériau électriquement isolant.

7. Moto-réducteur selon l'une quelconque des revendications précédentes, caractérisé en ce que le capot (17) est en matériau translucide.

## Claims

1. A motorised drive unit, in particular for a screen wiping apparatus, comprising an electric motor (11) driving a speed reduction system (12) contained within a casing which comprises a body (13), a cover (13a) for closing the said body, and a closure plate (11a) closing the yoke of the said motor (11), the said casing carrying, on an outer surface (25), connecting terminals (22, 21a, 21b, 21c) to which conductors (23, 19a, 19b, 19c) are soldered for supplying power to the electric motor (11), together with a hood (17) for overlying the said connecting terminals (22, 21a, 21b, 21c), characterised in that the connecting terminals (22, 21a, 21b, 21c) are carried, firstly by the body (13) and secondly by the closure plate (11a), and in that the said hood (17) includes fastening means (20a, 20b) for force-fitting on the said body (13), and spacing means.

2. A drive unit according to Claim 1, characterised in that the hood (17) is U-shaped, having two arms (17a, 17b) of unequal lengths.

3. A drive unit according to Claim 2, characterised in that the shorter arm (17b) of the said hood (17) engages on the body (13), while the other arm (17a) carries the said fastening means (20a, 20b).

4. A drive unit according to Claim 1, characterised in that the means for force-fitting consist of a spigot (32) cooperating with a bore (34) in the body (13).

5. A drive unit according to Claim 2, characterised in that the spacing means consist of a spacer (31) situated between the longer arm (17a) of the said hood (17) and the body (13).

6. A drive unit according to any one of the preceding Claims, characterised in that the hood (17) is of electrically insulating material.

7. A drive unit according to any one of the preceding Claims, characterised in that the hood (17) is of translucent material.

## Patentansprüche

1. Getriebemotor, insbesondere für eine Kraftfahrzeug-Scheibenwischeranlage, umfassend einen Elektromotor (11), der ein Untersetzungssystem (12) antreibt, das in einem Gehäuse angeordnet ist, das aus einem Sockel (13), einem Deckel (13a) zum Verschließen des besagten Sockels und einer Verschlußplatte (11a) für das Jochgestell besteht, das der besagte Motor (11) umfaßt, wobei das besagte Gehäuse auf einer Außenfläche (25) Anschlußklemmen (22, 21a, 21b, 21c), an denen Verbinder (23, 19a, 19b, 19c) für die Stromversorgung des Elektromotors (11) verlötet sind, und eine Abdeckkappe (17) trägt, um die besagten Anschlußklemmen (22, 21a, 21b, 21c) abzudecken , **dadurch gekennzeichnet**, daß die elektrischen Anschlußklemmen (22, 21a, 21b, 21c) einerseits auf dem Sockel (13) und andererseits auf der Verschlußplatte (11a) angebracht sind und daß die besagte Abdeckkappe (17) Mittel (20a, 20b) für die durch festes Einstecken erfolgende Befestigung auf dem besagten Sockel (13) und Verstrebungsmittel umfaßt.

2. Getriebemotor nach Anspruch 1, **dadurch gekennzeichnet,** daß die Abdeckkappe (17) eine U-Form hat, deren zwei Arme (17a, 17b) unterschiedliche Längen aufweisen.

3. Getriebemotor nach Anspruch 2, **dadurch gekennzeichnet,** daß der kürzere Arm (17b) der besagten Abdeckkappe (17) auf dem Sockel (13) zur Auflage kommt und der andere Arm (17a) die besagten Befestigungsmittel (20a, 20b) trägt.

4. Getriebemotor nach Anspruch 1, **dadurch gekennzeichnet,** daß die Einsteckmittel aus einem Stift (32) bestehen, der mit einer Bohrung (34) im Sockel (13) zusammenwirkt.

5. Getriebemotor nach Anspruch 2, **dadurch gekennzeichnet,** daß die Verstrebungsmittel aus einer Strebe (31) bestehen, die zwischen dem längeren Arm (17a) der besagten Abdeckkappe (17) und dem Sockel (13) angeordnet ist.

6. Getriebemotor nach einem der vorangehenden Ansprüche, **dadurch gekennzeichnet**, daß die Abdeckkappe (17) aus einem elektrisch nichtleitenden Material ausgeführt ist.

7. Getriebemotor nach einem der vorangehenden Ansprüche, **dadurch gekennzeichnet**, daß die Abdeckkappe (17) aus einem transparenten Material ausgeführt ist.
